# EUROPEAN PATENT APPLICATION

(11) **EP 2 230 490 A1**
(43) Date of publication of application: **22.09.2010**
(21) Application number: 09155246.3
(22) Date of filing: 16.03.2009
(51) Int. Cl.: G01F 1/66

(54) **Positioning of elements in flow meter housings**

(71) Applicant: KAMSTRUP A/S, 8660 Skanderborg (DK)
(72) Inventor: Laursen, Peter Schmidt, 8660 Skanderborg (DK)
(74) Representative: Plougmann & Vingtoft A/S

(57) **Abstract**

In order e.g. to provide an ultrasound flow meter 102 for ultrasonic measurement of a fluid flow which is simple and yet effective compared to known flow meters, there is disclosed an ultrasound flow meter 102 comprising two reflector units 210, and at least one of the reflector units comprises measuring tube engagement means 218 for engagement with a measuring tube. The at least one of the two reflector units 210 further comprises a reflector holder 206 for engaging with a flow meter housing, and at least one direction of the at least one of the two reflector units 210 is controlled by the reflector holder engaging with the flow meter housing. The flow meter measuring tube is controlled in at least one direction by engaging reflector unit engagement means 216 with the measuring tube engagement means 218 of the at least one of the two reflector units.

## Description

### FIELD OF THE INVENTION

The invention relates to an ultrasound flow meter for an ultrasonic measurement of fluid flow, and in particular to a construction and method of positioning one or more ultrasound reflectors and a measuring tube in a housing of the ultrasound flow meter.

### BACKGROUND OF THE INVENTION

Flow meters of the kind described herein are normally used as a heat meter, a cooling meter, a liquid meter, or a gas meter and may in general be referred to as a fluid flow meter. Such flow meters may be used for charging a customer connected to a fluid piping system. Normally, flow meters suited for measuring a flow of fluid in connection with charging of a consumed quantity of e.g. heat, cooling, water or gas will have a housing for receiving a fluid flow to be measured. Connection means to other fluid flow piping elements are present in ends of the housing.

In an ultrasound flow meter, a number of ultrasound transducers are provided, and can be placed on opposite sides of the housing at each of its ends, thus allowing ultrasonic measurements to be performed on the fluid flowing through straight measurement lines between the ultrasonic transducers; the straight measurement lines possibly forming an angle relative to the flow direction. On compact flow meters, the ultrasound transducers can be placed on the same side of the housing, the measurement line then being made by using a set of reflectors for forming a measurement line profile between the ultrasound transducers.

For obtaining well defined measurement flow geometry, a measuring tube of e.g. a polymer material is present within the housing in some flow meter constructions. The measuring tube normally has a shorter length than the flow meter housing and measurement line reflectors may be placed adjacent to ends of the measuring tube.

In some flow meters, temperature sensors are also mounted in the housing, such that the temperature sensor can come into contact with the fluid inside the housing.

Further, the flow meter housing normally includes outside elements, e.g. for attachment of the housing to a control unit with electronic components connected to the ultrasound transducers and temperature sensor.

Flow meters known to the present inventor may be seen to suffer from one or more of the following disadvantages; too large measurement tolerances, inconsistent measurements, expensive production, expensive assembly, expensive maintenance. The inventor of the present invention has therefore appreciated that an improved flow meter is of benefit, and has in consequence devised the present invention.

### SUMMARY OF THE INVENTION

It may be seen as an object of the present invention to provide an improved ultrasound flow meter for ultrasonic measurement of a fluid flow and an improved method of manufacturing of flow meter for ultrasonic measurement of a fluid flow.

Preferably, the invention alleviates, mitigates or eliminates one or more of the above or other disadvantages singly or in any combination.

In particular, it may be seen as an object of the invention to provide a flow meter for ultrasonic measurement of a fluid flow which is simple and yet effective compared to known flow meters.

Accordingly there is provided, in a first aspect, an ultrasound flow meter for ultrasonic measurement of a fluid flow, the flow meter comprising
- a flow meter housing having an inlet end and an outlet end,
- a flow meter measuring tube insertable from one of ends and comprising reflector unit engagement means for engaging with a reflector unit,
- two reflector units, each insertable in the flow meter housing from one of the inlet end and the outlet end, and at least one of the reflector units comprising measuring tube engagement means for engaging with the measuring tube, and the at least one of the two reflector units further comprises a reflector holder for engaging with the flow meter housing, and at least one direction of the at least one of the two reflector units is controlled by the reflector holder engaging with the flow meter housing, and wherein the flow meter measuring tube is controlled in at least one direction by engaging the reflector unit engagement means with the measuring tube engagement means of the at least one of the two reflector units.

Thus an improved ultrasound flow meter for ultrasonic measurement of a fluid flow is provided. An improvement or advantage may lie therein that by providing a flow meter as described a flow meter is provided which is simple and yet effective compared to known flow meters.

In particular it may be seen as an improvement that at least one of the reflector units comprises measuring tube engagement means for engaging with the measuring tube, and that the at least one of the two reflector units further comprises a reflector holder for engaging with the flow meter housing, and that at least one direction of the at least one of the two reflector units is controlled by the reflector holder engaging with the flow meter housing, and wherein the flow meter measuring tube is controlled in at least one direction by engaging the reflector unit engagement means with the measuring tube engagement means of the at least one of the two reflector units.

When the at least one direction of the at least one of the two reflector units is controlled by the reflector holder engaging with one or more steps in a size of a diameter or diagonal of a through-going hole in the flow meter housing, a simple and yet effective way of controlling at least one direction of a reflector unit is provided. A step in the size of the diameter or diagonal of the trough-going hole may be provided as a step in the size of the diameter or diagonal seen in a longitudinal direction and/or in a rotational direction. The step in the size in a rotational direction of the diameter of a partly circular though-going hole may as an example be provided by a flow meter housing having a D-shaped in- or outlet.

When the flow meter housing comprises an end stop where the position of the reflector unit in the longitudinal direction within the flow meter housing is controlled by a reflector holder of the reflector unit being inserted in the flow meter housing until it is in engagement with the end stop, an embodiment is disclosed where the longitudinal position is controlled by the engagement.

When the flow meter housing further comprises a longitudinal groove where the position of the reflector unit in a rotational direction within the flow meter housing is controlled by the reflector unit engaging with the longitudinal groove, an embodiment is disclosed where the rotational position is controlled by the engagement.

When a position of the flow meter measuring tube in a longitudinal and a rotational direction within the flow meter housing is controlled by the engagement of the flow meter measuring tube with at least one of the reflector units, an embodiment is disclosed where both the longitudinal and the rotational position is controlled by the engagement. The rotational fixing may be embodied by protrusions on an outside perimeter of the measuring tube, which protrusions are fitted to receive the reflector unit.

A position of the flow meter measuring tube in a longitudinal and a rotational direction within the flow meter housing is possibly controlled by an engagement of the flow meter measuring tube with two reflector units. The reflector units may possibly be inserted separately from each end of the flow meter housing. An alternative to this may be only to fix the measuring tube in the longitudinal direction in the direction of the flow, and only to prevent the tube from moving upstream by the flow of fluid. Preventing the measuring tube from moving upstream may possibly be provided by an outer diameter of the measuring tube being press-fitted towards an inside surface on a through-going hole between the inlet and the outlet end of the flow meter housing. In this way the flow meter may be disassembled and the measuring tube and reflector units taken out of the flow meter housing by pressing the measuring tube in direction opposite to the flow direction.

When the reflector units are each provided as a monolithic reflector unit, a possible advantage is that assembling tolerances between a reflector and a reflector holder are prevented. Furthermore a possible advantage is that the reflector and the reflector holder will less unlikely fall apart.

When the measuring tube engagement means and the reflector holder engagement means are provided as a one way snap fit connection, a simple and possible embodiment is provided. Alternatively or additionally, others connections such as press-fitting the parts to each other may be used.

When the flow meter housing part for surrounding the measuring tube, which part has an inlet end and an outlet end, is provided as a single monolithic part, a possible advantage is that any assembly tolerances between a number of interconnectable housing parts are prevented.

When a depth of the longitudinal groove in the flow meter housing is increased towards the end stop of the longitudinal groove, a possible advantage is that this is a way of providing a preferred one way snap connection.

In accordance with the method aspect of the invention there is provided a method of manufacturing of flow meter for ultrasonic measurement of a fluid flow, the flow meter comprising
- a flow meter housing having an inlet end and an outlet end
- a flow meter measuring tube
- two reflector units for reflecting ultrasound, and wherein the method comprises
- inserting the flow meter measuring tube through the inlet end or the outlet end of the flow meter housing, and
- inserting the two reflector units in the flow meter housing from one or both of the inlet end and the outlet end, and
- controlling at least one direction of at least one of the two reflector units by engaging at least one of the two reflector units with the flow meter housing, and
- controlling the flow meter measuring tube in at least one direction by engaging the reflector unit with the measuring tube of the at least one of the two reflector units.

Thus a simple and yet effective way of providing a flow meter is given. A possible advantage by the described method may be that assembly of key elements in the flow meter is provided, at least in one direction.

In accordance with embodiments of the method aspect a longitudinal direction of at least one of the two reflector units may be provided by inserting a reflector unit through the inlet or outlet end until the reflector unit hits an end stop in the flow meter housing and/or at least one direction of the flow meter measuring tube within the flow meter housing is provided by engaging at least one of the first and the second reflector units with the flow meter measuring tube.

Furthermore the method may further comprise locking at least one of the two reflector units to the flow meter measuring tube.

It must be understood that an advantage mentioned herein can be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 shows a flow meter in a perspective view,
FIG. 2 shows a flow meter housing in a cross-sectional view and illustrates an assembly routine of a flow meter measuring tube and two reflector units,
FIG. 3 shows the flow meter measuring tube provided with two reflector units,
FIG. 4 shows a reflector unit, and
FIG. 5 shows the flow meter housing in a cross-sectional view with the flow meter measuring tube and the two reflector units inserted.

### DESCRIPTION OF EMBODIMENTS

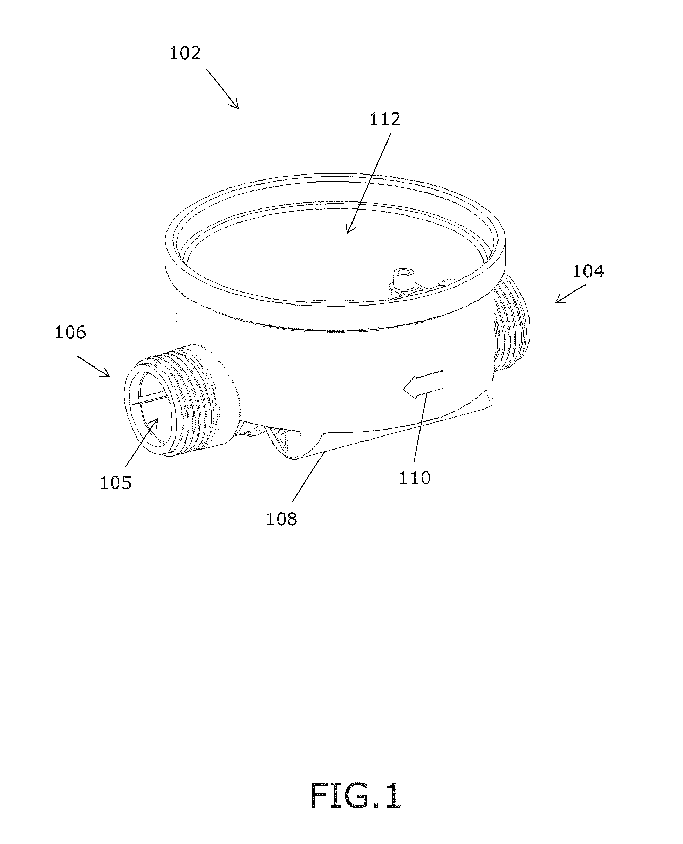

An embodiment of the invention is illustrated in FIG 1 which shows a perspective view of a flow meter housing 108 having an inlet end 104 and an outlet end 106, where a flow of fluid can be provided in a flow direction 110.

The flow meter housing is provided with a cavity 105 in the form of a through-going hole for receiving a flow of fluid to be measured. The housing is furthermore provided with connection means in both ends. A centreline through the through-going hole and in a centre of the connection means is provided on a common straight line. The connection means is in the shown example threads provided for a fluid tight connection of the flow meter with tubing or channel elements in both ends.

It follows from the figure that the only holes in a part of the flow meter housing which is provided to receive a measuring tube and reflector units is the inlet and the outlet.

In the shown example the flow meter housing also includes a cavity 112 outside the through-going hole for insertion of ultrasound transducers, control electronic etc. The transducers and the control electronic are not shown in the figure.

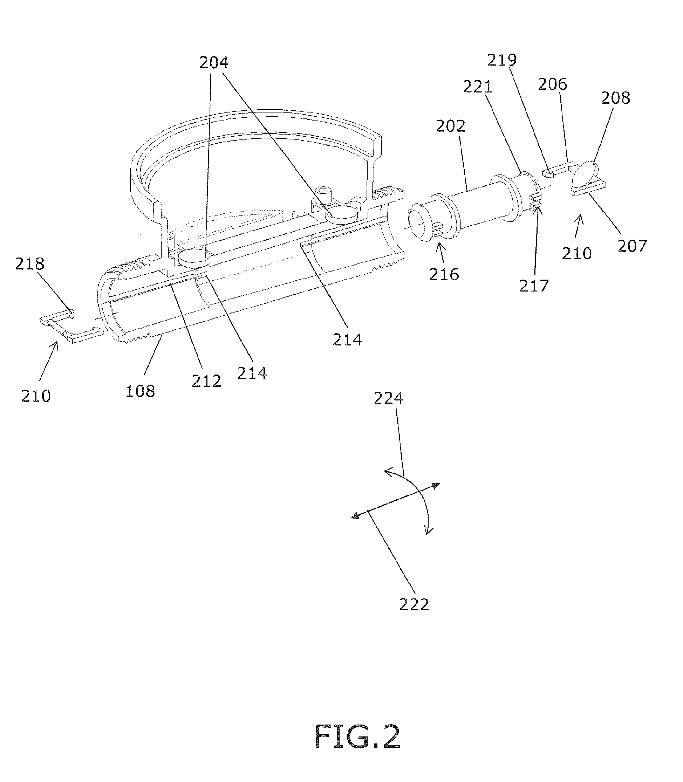

FIG. 2 illustrates an assembly procedure for producing the flow meter. The figure shows the two reflector units 210. Each unit integrates a reflector 208 and a reflector holder 206. The two-way arrows 222, 224 illustrate longitudinal direction 222 and rotational direction 224 in the figure.

The measuring tube 202 is inserted from one of the ends and in the shown example from the inlet end. Possibly the inlet end reflector unit was mounted on this end of the measuring tube 202 prior to insertion of the measuring tube into the flow meter housing. The insertion direction of the measuring tube in the flow meter housing and of the reflector unit on the measuring tube is parallel with the flow direction. Although the figure shows a cross section through the middle of the flow meter housing there is not shown any hatch on the flow meter housing. The measuring tube 202, the reflector units 210 and the transducers 204 are not shown in cross section.

After insertion of the measuring tube 202 a remaining reflector unit 210 is inserted from one end of the flow meter housing or one reflector unit is inserted from each end. When both the measuring tube 202 and the reflector units 210 are inserted and pressure has been applied for both reflector units to engage and lock by snapping to the measuring tube 202 the position of the measuring tube relative to a position of the transducers 204, or a position where the transducers are to be mounted is fixed in an exact manner.

A longitudinal groove 212 extending in the flow direction is shown starting in each end of the flow meter housing and each ending at an end stop 214. The two grooves and the stops are fitted in length, width and depth to receive the reflector units and position them in a fixed position relative to the ultrasound transducers 204. The grooves 212 are provided symmetrically on opposite sides of the flow meter housing. The grooves at the flow meter housing sides are used for mounting of the reflector units 210 in a predefined and exact position of the measurement channel tube and the reflectors relative to the ultrasound transducers 204. A groove 212 is an example of a step in a diameter of the flow meter housing in a rotational direction and the end stop 214 is an example of a step in a size of the diameter when seen in the longitudinal direction.

The flow meter housing 108 is in the shown example made of a polymeric material such as PolyPhenylene Sulphide (PPS); however other materials such as ceramics or a metal such as brass or other plastics can be used too. The measuring tube is in the shown example made of a polymer material; however, alternatively metallic materials or ceramics can be used.

For the reflector units 210 a metal such as stainless steel, is most commonly used, since such material offers the best physical properties. Other materials could however be used.

It is illustrated in the figure that the reflector units 210 are each provided as a monolithic reflector unit, and that the units includes arms with measuring tube engagement means 218 for engaging and locking each reflector unit 210 to reflector unit engagement means 216 included on an outside surface of the measuring tube 202 perimeter.

In the shown example the reflector unit engagement means 216 for engaging with the measuring tube engagement means 218 are provided as a one way snap fit connection, which snaps and locks the measuring tube 202 and the reflector units 210 to each other in a longitudinal direction when completely engaged. A one way connection is to be understood as a connection which can not be released and disconnected in an opposite direction. A two way solution where the connection can be released is also possible. In that the groove 212 is fitted with a width which is just below a material thickness of the reflector holder arms the parts are also positioned in a rotational direction within the flow meter housing 108.

A depth of the groove 212 in the flow meter housing 108 is possibly increased towards the end stop 214 of the groove 212 (not shown). This may be provided in order for the measuring tube engagement means 218, in the example embodied by a hook 219, to snap behind an edge 221 on the measuring tube perimeter.

In that the measuring tube engaging means also includes protrusions 217 on the outside perimeter, which protrusions are fitted with a distance between them corresponding to the material thickness of the reflector holder arm 207, the position of the measuring tube is also locked in the rotational direction when the measuring tube is assembled with the reflector units 210 in the flow meter housing 108, i.e. when the reflector holder arms are inserted between the protrusions 217. Though, these protrusions 217 may not be needed, e.g. in a flow meter construction where the measuring tube and the through-going hole in the flow meter housing is rotation symmetrical around a centre axis.

Alternatively or additionally, e.g. an upper surface of the measuring tube is provided with a form which is fitted to lock the measuring tube in the rotational direction within the flow meter housing. In the drawings a flat upper surface of the measuring tube is illustrated.

In the shown embodiment the reflector unit, which integrates the reflector and the reflector holder in one monolithic unit, is manufactured by dye punching of a metal sheet, such as a stainless steel metal sheet. The reflector unit has an oval reflector part being angled relative to a plane of the reflector holder arms 207, the reflector holder arms has an oblong shape with a thickness equal to the thickness of the sheet metal used. The reflector holder arms are parallel and have symmetrical dimensions seen perpendicular to the reflector holder plane. Due to this parallelism, it is possible to slide the reflector units 210 into the flow meter housing 108 in the grooves 212, which grooves can be casted, machined or injection moulded into the flow meter housing 108.

The predefined position of the reflectors can be defined by pushing each of the reflector units to the end stops 214 of the grooves 212 from each side of the flow meter.

By further creating the hook shaped geometry as described at the end of each of the oblong arm parts of the reflector unit 210 it is possible to snap the reflector units 210 to the measurement channel tube, which has one or more snapping counterparts for the hook shaped geometry.

A possible way of pre-positioning the measuring tube in a production procedure would be by providing a step in an inner diameter of the through-going hole in the flow meter housing or making the housing drafted, in order to stop the measurement channel tube when inserting it. Another possibility is to provide one or both of the inlet and outlet holes with a conical form or a predetermined draft angle.

In another embodiment of providing the reflector unit, the unit is manufactured by sintering or casting, allowing for more complex shapes than with dye punching. By sintering or casting, the rear side of the reflector part can be made in any desired shape in order to ease or create a specific fluid flow around the reflector unit 210.

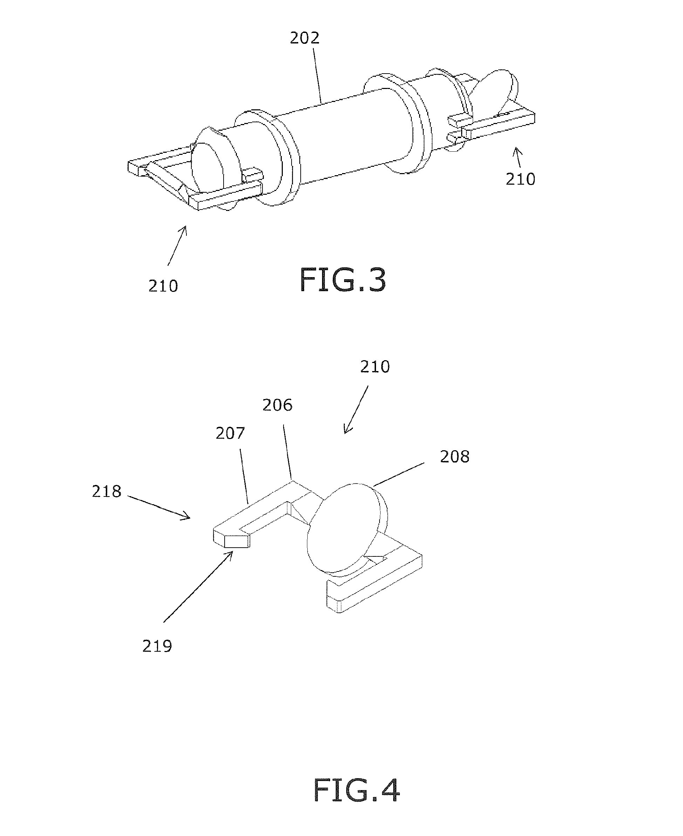

FIG. 3 is a close up perspective view of the measuring tube 202 and the reflector units 210. The measuring tube 202 is preferably made of a polymeric material and the reflector unit 210 of a metallic or ceramic material.

FIG. 4 shows the unit 210 made of a non-polymeric material, preferably a metal. The unit can be manufactured by die punching of a sheet metal or can be sintered or casted. The reflector 206 is in the shown example angled 45 degrees relative to the flow direction.

The two oblong arms 207 at each of the reflector unit sides are fitted so as to be able to slide into the grooves of the flow meter housing, fixing the reflector and the measurement channel tube in a rotational direction relative to the axis of the through-going hole.

The hook 219 at the end of each of the oblong arms 207 is provided for snapping into a counterpart in the measurement channel tube and hereby fixing the reflector and the measuring tube in the flow direction in of the through-going hole in the flow meter housing 108.

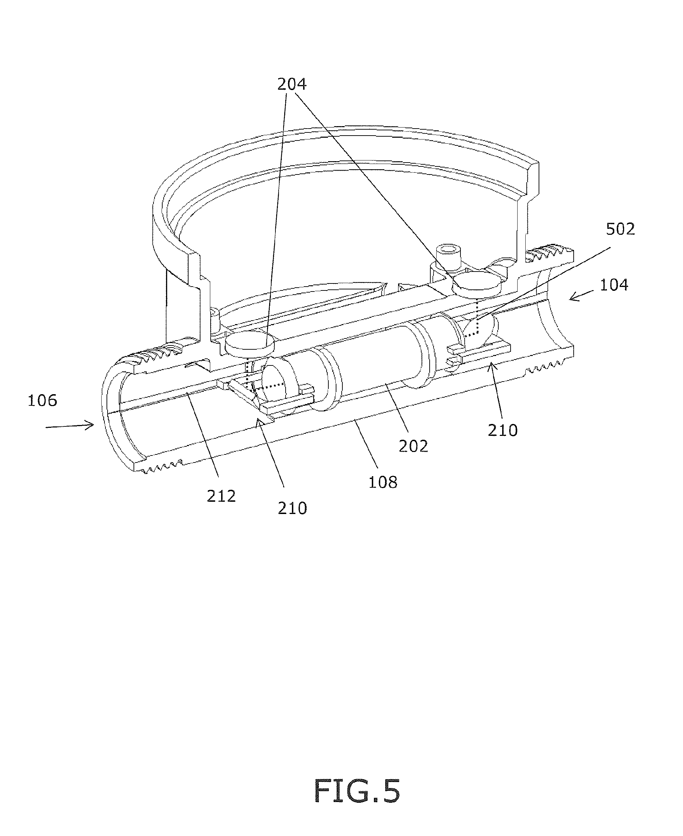

FIG. 5 shows a section cut of the flow meter housing 108 from Figure 1, where the measuring tube 202 is seen fixed by means of a set of integrated reflector holder and reflector units 210 which are inserted in the grooves 212 of the flow meter housing 108.

A measuring line 502, illustrated with a square dot line, from and to the transducers 204, via the reflector units 210, is now defined in an accurate and consistent manner.

The measuring tube 202 can be provided in one of the following group of materials; a polymeric material, a metal, a ceramic material. The flow meter housing 108 can be provided in one of the following group of materials; a polymeric material, a metal, a ceramic material. The reflector unit 210 can be provided in one of the following group of materials; a polymeric material, a metal, a ceramic material.

In short it is herein described that in order e.g. to provide an ultrasound flow meter 102 for ultrasonic measurement of a fluid flow which is simple and yet effective compared to known flow meters, there is disclosed an ultrasound flow meter 102 comprising two reflector units 210, and at least one of the reflector units comprises measuring tube engagement means 218 for engagement with a measuring tube. The at least one of the two reflector units 210 further comprises a reflector holder 206 for engaging with a flow meter housing, and at least one direction of the at least one of the two reflector units 210 is controlled by the reflector holder engaging with the flow meter housing. The flow meter measuring tube is controlled in at least one direction by engaging reflector unit engagement means 216 with the measuring tube engagement means 218 of the at least one of the two reflector units.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims, however the inclusion of the reference signs is only for clarity reasons and should not be construed as limiting the scope of the claims.

## Claims

1. An ultrasound flow meter (102) for ultrasonic measurement of a fluid flow, the flow meter comprising
- a flow meter housing (108) having an inlet end (104) and an outlet end (106),
- a flow meter measuring tube (202) insertable from one of ends (104, 106) and comprising reflector unit engagement means (216) for engaging with a reflector unit (210),
- two reflector units (210), each insertable in the flow meter housing (108) from one of the inlet end (104) and the outlet end (106), and at least one of the reflector units comprising measuring tube engagement means (218) for engaging with the measuring tube (202), and the at least one of the two reflector units (210) further comprises a reflector holder (206) for engaging with the flow meter housing, and at least one direction of the at least one of the two reflector units (210) is controlled by the reflector holder engaging with the flow meter housing, and wherein the flow meter measuring tube is controlled in at least one direction by engaging the reflector unit engagement means (216) with the measuring tube engagement means (218) of the at least one of the two reflector units.

2. An ultrasound flow meter according to any of the preceding claims, wherein the at least one direction of the at least one of the two reflector units (210) is controlled by the reflector holder engaging with one or more steps in a size of a diameter or diagonal of a through-going hole in the flow meter housing.

3. An ultrasound flow meter according to claim 1, further comprising an end stop (214) in the flow meter housing (108) and wherein the position of the reflector unit in the longitudinal (222) direction within the flow meter housing is controlled by a reflector holder (206) of the reflector unit being inserted in the flow meter housing until it is in engagement with the end stop (214).

4. An ultrasound flow meter according to any of the preceding claims, further comprising a longitudinal groove (212) in the flow meter housing (108), and wherein the position of the reflector unit in a rotational (224) direction within the flow meter housing is controlled by the reflector unit engaging with the longitudinal groove (212).

5. An ultrasound flow meter according to any of the preceding claims, wherein a position of the flow meter measuring tube (202) in a longitudinal (222) and a rotational direction (224) within the flow meter housing is controlled by an engagement of the flow meter measuring tube (202) with at least one of the reflector units (210).

6. An ultrasound flow meter according to any of the preceding claims, wherein the units (210) are each provided as a monolithic reflector unit (210).

7. An ultrasound flow meter according to any of the preceding claims, wherein the measuring tube engagement means (216) and the reflector holder engagement means (218) are provided as a one way snap fit connection.

8. An ultrasound flow meter according to any of the preceding claims, wherein the flow meter housing part for surrounding the measuring tube, which part has an inlet end and an outlet end, is provided as a single monolithic part (108).

9. An ultrasound flow meter according to any of the preceding claims 4-8, wherein a depth of the longitudinal groove (212) in the flow meter housing is increased towards the end stop (214) of the longitudinal groove.

10. A method of manufacturing of flow meter for ultrasonic measurement of a fluid flow, the flow meter comprising
- a flow meter housing (108) having an inlet end (104) and an outlet end (106)
- a flow meter measuring tube (202)
- two reflector units (210) for reflecting ultrasound, and wherein the method comprises
- inserting the flow meter measuring tube through the inlet end (104) or the outlet end (106) of the flow meter housing, and
- inserting the two reflector units (210) in the flow meter housing (108) from one or both of the inlet end (104) and the outlet end (106), and
- controlling at least one direction of at least one of the two reflector units (210) by engaging at least one of the two reflector units (210) with the flow meter housing, and
- controlling the flow meter measuring tube in at least one direction by engaging the reflector unit with the measuring tube of the at least one of the two reflector units.

11. A method according to claim 10, wherein controlling a longitudinal direction of at least one of the two reflector units (210) is provided by inserting a reflector unit through the inlet or outlet end until the reflector unit hits an end stop (214) in the flow meter housing (108).

12. A method according to claim 10 or 11, wherein controlling at least one direction of the flow meter measuring tube (202) within the flow meter housing (108) is provided by engaging at least one of the first and the second reflector units (210) with the flow meter measuring tube (202).

13. A method according to any of the preceding claims 10, 11 or 12, the method further comprising locking at least one of the two reflector units (210) to the flow meter measuring tube (202).
